Europäisches Patentamt

European Patent Office

Office européen des brevets

(11) Publication number: **0 384 899**
**A1**

## EUROPEAN PATENT APPLICATION

(21) Application number: 90830044.5

(51) Int. Cl.⁵: **F16F 1/36**

(22) Date of filing: **06.02.90**

(30) Priority: **22.02.89 IT 6711689**

(43) Date of publication of application:
**29.08.90 Bulletin 90/35**

(84) Designated Contracting States:
**DE ES FR GB GR IT NL SE**

(71) Applicant: **IVECO FIAT S.p.A.**
**Via Puglia 35**
**I-10156 Torino(IT)**

(72) Inventor: **Filippi, Federico**
**Via Mazzini 40**
**I-10123 Torino(IT)**
Inventor: **Quaranta, Sante**
**Via Umberto I, 11**
**I-10040 Rivalta (Torino)(IT)**

(74) Representative: **Buzzi, Franco et al**
**c/o Jacobacci-Casetta & Perani S.p.A. Via**
**Alfieri, 17**
**I-10121 Torino(IT)**

(54) **A leaf spring of composite material for vehicle suspensions and a method for its manufacture.**

(57) A glass-fibre-reinforced plastics leaf spring (1) for vehicle suspensions incorporates additional re-inforcing fibres (2) which have a greater modulus of elasticity than the glass fibres and are arranged substantially along the neutral bending axis (A) of its cross-section.

EP 0 384 899 A1

FIG. 1

## A leaf spring of composite material for vehicle suspensions and a method for its manufacture

The present invention relates in general to leaf springs of composite material for motor vehicle suspensions

More particularly, the invention concerns a leaf spring produced by the moulding of plastics reinforced with oriented glass fibres.

As is well known, for a given vertical stiffness, leaf springs of this type have a greater energy-storage capacity and a lower weight than conventional steel leaf springs. However, for a given vertical stiffness, width and length, leaf springs of composite material have a lower transverse stiffness than those of steel and are normally unacceptable for use in commercial vehicle suspensions.

The object of the present invention is to resolve the above problem and to produce a leaf spring of composite material which has a considerably increased lateral stiffness, at least such as to enable its use in commercial vehicle suspensions, without any alteration to its width or length and without an increase in thickness.

According to the invention, this object is achieved by means of a leaf spring for motor vehicle suspensions which is produced by the moulding of glass-fibre-reinforced plastics, characterised in that it incorporates additional reinforcing fibres which have a greater modulus of elasticity than the glass fibres and are arranged along the neutral bending axis of its cross-section.

By virtue of their arrangement, the reinforcing fibres, which are preferably but not necessarily constituted by carbon fibres, enable the structure of the leaf spring to be stiffened with respect to lateral stresses, without its vertical stiffness normally being affected: however, when there is also a need to alter its vertical stiffness, in the sense of an increase thereof for a given thickness of the spring, it is sufficient to alter the positioning or the thickness of the additional fibres relative to the neutral bending axis.

The additional reinforcing fibres may extend through the entire cross-section of the leaf spring or through only part of its cross-section. In the latter case, the fibres may be arranged near the sides or in the central region of the cross-section of the spring.

A further subject of the invention is a method for the production of the leaf spring defined above, characterised in that it consists of the incorporation, during the moulding of the spring, of additional reinforcing fibres which have a greater modulus of elasticity than the glass fibres and are arranged along the neutral axis of the cross-section of the leaf spring.

The invention will now be described with reference to the appended drawings, provided purely by way of non-limiting example, in which:

Figure 1 is a schematic cross-section of a leaf spring of composite material according to the invention, and

Figures 2 and 3 show two variants of Figure 1.

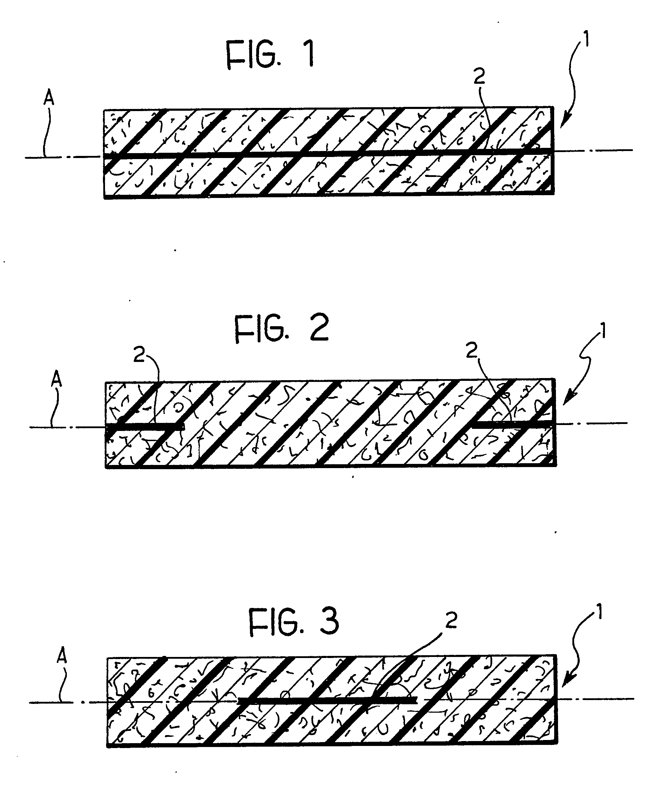

With reference to Figure 1, a leaf spring for vehicle suspensions, produced by the moulding of glass-fibre-reinforced plastics, is schematically indicated 1. According to the invention, additional reinforcing fibres 2 are incorporated during moulding and are arranged substantially along the neutral bending axis A of the leaf spring 1.

The additional reinforcing fibres 2 have a modulus of elasticity which is considerably greater than that of the glass fibres: they are conveniently constituted by carbon fibres.

The thickness of the layer of the additional fibres 2 is not more than 0,4, and preferably 0,1; the height of the leaf spring cross-section.

For a given vertical stiffness, the leaf spring 1 is thus provided with considerably greater lateral stiffness than conventional glass-fibre-reinforced plastics springs.

In the case of Figure 1, the additional reinforcing fibres 2 extend through the entire cross-section of the leaf spring 2: this achieves the maximum transverse stiffening.

Alternatively, the additional reinforcing fibres 2 may extend through only part of the cross-section of the spring 1: in this case, the fibres 2 may be arranged near the sides of the spring (Figure 2) or in its central region (Figure 3). In the first case moderate transverse stiffening is achieved, whilst in the second case the stiffening is at a minimum.

The arrangement of the additional reinforcing fibres 2 along the neutral axis A prevents the vertical stiffness of the leaf spring 1 from being affected. However, if there is a need to vary or modulate the vertical stiffness, it is sufficient to alter the positioning of the additional fibres 2 relative to the neutral axis A, or the thickness of the fibres 2.

It is clear from the above that the transverse stiffening of the spring according to the invention is achieved without modification of its geometrical dimensions and without involving complications in its production cycle. In effect, in order to incorporate the additional reinforcing fibres during the moulding of the leaf spring, it suffices to replace the glass fibres which are normally arranged in the region of the neutral bending axis of the cross-section of the spring 1 with the additional reinforcing fibres.

## Claims

1. A glass-fibre-reinforced plastics leaf spring for vehicle suspensions. characterised in that it incorporates additional reinforcing fibres (2) which have a greater modulus of elasticity than the glass fibres and are arranged substantially along the neutral bending axis (A) of its cross-section (1).

2. A leaf spring according to Claim 1, characterised in that the thickness of the additional fibres (2) is not more than 0,2 the height of the leaf spring (1) cross-section.

3. A leaf spring according to Claim 1 or 2. characterised in that the reinforcing fibres (2) extend through the entire cross-section of the leaf spring (1).

4. A leaf spring according to Claim 1 or 2 , characterised in that the reinforcing fibres (2) extend through part of the cross-section of the leaf spring (1).

5. A leaf spring according to Claim 4, characterised in that the additional reinforcing fibres (3) are arranged near the sides of the cross-section of the leaf spring (1).

6. A leaf spring according to Claim 4, characterised in that the additional reinforcing fibres (2) are arranged in the central region of the cross-section of the leaf spring (1).

7. A leaf spring according to any one of the preceding claims, characterised in that the additional reinforcing fibres (2) are arranged at a variable spacing or thickness relative to the neutral bending axis (A) of the cross-section of the leaf spring (1).

8. A leaf spring according to any one of the preceding claims, characterised in that the additional reinforcing fibres (2) are carbon fibres.

9. A method of manufacturing a leaf spring for motor vehicle suspensions by the moulding of glass-fibre-reinforced plastics, characterised in that it consists of the incorporation, during moulding, of additional reinforcing fibres (2) which have a greater modulus of elasticity than the glass fibres and are arranged substantially along the neutral axis (A) of the cross-section of the leaf spring (1).

10. A method according to Claim 9, characterised in that the thickness of the additional fibres (2) is not more than 0,2 the height of the leaf spring (1) cross-section.

11. A method according to Claim 9 or 10, characterised in that the additional reinforcing fibres (2) are arranged through the entire cross-section of the leaf spring (1).

12. A method according to Claim 9 or 10, characterised in that the additional reinforcing fibres (2) are arranged through part of the cross-section of the leaf spring (1).

13. A method according to Claim 12, characterised in that the additional fibres (2) are arranged near the sides of the cross-section of the leaf spring (1).

14. A method according to Claim 12, characterised in that the additional reinforcing fibres (2) are arranged in the central region of the cross-section of the leaf spring (1).

15. A method according to any one of Claims 9 to 14, characterised in that the additional reinforcing fibres (2) are arranged at a variable spacing or thickness relative to the neutral bending axis (A) of the cross-section of the leaf spring (1).

16. A method according to any one of Claims 9 to 15, characterised in that the additional reinforcing fibres (2) are carbon fibres.

# FIG. 1

# FIG. 2

# FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | GB-A-1333558 (THE SECRETARY OF STATE FOR DEFENCE) <br> * the whole document * | 1, 3, 6, 8, 9, 11, 14, 16 | F16F1/36 |
| X | US-A-4509774 (B.V. BOOHER) <br> * column 4, line 51 - column 6, line 47; figures 4, 5 * | 1, 3, 6, 8, 9, 11, 14, 16 | |
| Y | GB-A-835355 (CARRIER CONVEYOR CORP.) <br> * claims 1, 8, 9; figure 11 * | 1, 3 | |
| Y | GB-A-2161424 (THE SECRETARY OF STATE FOR DEFENCE) <br> * claims 2, 3 * | 1, 3 | |
| A | | 9, 11 | |
| A | PATENT ABSTRACTS OF JAPAN <br> vol. 13, no. 14 (M-784)(3362) 13 January 1989, <br> & JP-A-63 225738 (MAZDA MOTOR CORP.) 20 September 1988, <br> * the whole document * | 1, 3 | TECHNICAL FIELDS SEARCHED (Int. Cl.5 ) <br><br> F16F |
| A | PATENT ABSTRACTS OF JAPAN <br> vol. 7, no. 223 (M-247)(1368) 04 October 1983, <br> & JP-A-58 118342 (HINO JIDOSHA KOGYO K.K.) 14 July 1983, <br> * the whole document * | 1, 3-8 | |

The present search report has been drawn up for all claims

| Place of search | Date of completion of the search | Examiner |
|---|---|---|
| THE HAGUE | 22 MAY 1990 | SINGER G.M. |